(19) **Europäisches Patentamt**

**European Patent Office**

**Office européen des brevets**

(11) **EP 1 555 102 A1**

(12) **EUROPEAN PATENT APPLICATION**

(43) Date of publication:
**20.07.2005 Bulletin 2005/29**

(51) Int Cl.⁷: **B29B 9/06**, C08J 9/16, C08J 3/12

(21) Application number: **04030860.3**

(22) Date of filing: **28.12.2004**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **13.01.2004 JP 2004006063**

(71) Applicant: **JSP Corporation**
**Tokyo 100-0005 (JP)**

(72) Inventors:
• **Sasaki, Hidehiro**
**c/o JSP Corp. Kanuma Res. Center**
**Tochigi-ken (JP)**

• **Hira, Akinobu c/o JSP Corp. Kanuma Res. Center Tochigi-ken (JP)**
• **Tokiwa, Tomoo**
**c/o JSP Corp. Kanuma Res. Center**
**Tochigi-ken (JP)**

(74) Representative:
**Luderschmidt, Schüler & Partner GbR**
**Patentanwälte,**
**John-F.-Kennedy-Strasse 4**
**65189 Wiesbaden (DE)**

(54) **Process for preparing thermoplastic resin pellets**

(57)     A process for preparing thermoplastic resin pellets, including extruding a melt of a thermoplastic resin into a gas phase through a die in the form of strands, immersing the strands in a bath containing water and a surfactant to cool the strands, taking the cooled strands out of the bath, and cutting the taken-out strands into pellets.

**Description**

This invention relates to a process for preparing thermoplastic resin pellets, to a thermoplastic resin pellet obtainable by the process and to an expanded thermoplastic resin bead obtainable from the pellet.

In-mold foam moldings of a base resin containing a polystyrene-based resin or a polyolefin-based resin are widely used in various applications such as containers (e.g. fish boxes), packaging materials, impact energy absorbing materials (e.g. bumpers) and heat insulating materials because of their excellent softness and impact resisting properties. The foam moldings are generally produced by a bead molding method in which expanded beads are filled in a mold cavity and heated and fused with steam to form an integral molding.

The expanded beads may be produced from resin pellets or particles by impregnating the pellets with a blowing agent and heating the resulting pellets to foam and expand the pellets. A strand cut method is generally adopted for the preparation of the resin pellets, since the method permits a large scale production of resin pellets with a uniform size. In the strand cut method, a base resin and additives are melted and kneaded in an extruder to form a melt. The melt is extruded into a gas phase through a die having a plurality of orifices to form strands. The strands are immersed in water so that the strands are cooled and solidified. The cooled strands are then introduced into a dewatering zone and then cut to obtain pellets. Such a strand cut method is disclosed in, for example, U. S. Patent No. 4,692,507 and Japanese Unexamined Patent Publication No. H09-174545. Besides the expanded beads, the resin pellets may be utilized as a raw material for moldings or may be processed to give fillers.

The known strand cut method, however, has a problem because very small resin pellets having a very small weight cannot be prepared on a large scale. A demand for such small pellets are now increasing, since the pellets can give small size expanded beads which can be suitably filled in a narrow mold cavity and which can give thin or small size moldings. Small pellets have also an advantage that they can be efficiently kneaded in an extruder and, therefore, can be suitably used as a raw material for extrusion molding. If the known strand cut method is adopted to produce small resin pellets with a practically acceptable resin extrusion rate, then it will be necessary to run the strands at an excessively high speed and to increase the cutting speed of the cutter beyond its ability. With the known strand cut method, therefore, it is not possible to produce small resin pellets having a uniform size in a stable manner.

As another resin pellet preparation method, there is also known an under-water cut method (UWC method) in which a melt of a thermoplastic resin is extruded through a die having a plurality of orifices into warm water at 65-95°C to form strands, the resulting strands thus cooled being cut in the warm water to give pellets (Japanese Unexamined Patent Publication No. H10-119037). While the UWC method may prepare small size pellets, the equipment costs are very high. Further, the UWC method requires well-balanced cutting speed and extrusion rate in order to obtain pellets having a uniform size. Additionally, not all thermoplastic resins can be pelletized by the UWC method. Thus, from the standpoint of production efficiency and process flexibility, the strand cut method is superior to the UWC method.

The present invention has been made in view of the foregoing problems of the conventional strand cut method.

In accordance with one aspect of the present invention there is provided a process for preparing thermoplastic resin pellets, comprising the steps of:

    (a) extruding a melt of a thermoplastic resin into a gas phase through a die in the form of strands;
    (b) immersing said strands in a bath containing water and a surfactant to cool said strands;
    (c) taking said cooled strands out of said bath; and
    (d) cutting said taken-out strands into pellets.

An attempt has been made by the present inventors to prepare small thermoplastic resin pellets by a strand cut method in which a die provided with an increased number of orifices is used for the purpose of maintaining the practically acceptable extrusion rate without need to increase the cutting speed. With such a method, however, adjacent strands are found to be bonded together when they are immersed in water. The present inventors have also found that the bonding of the strands occurs due to a vibration of the strands caused when the hot strands are brought into contact with water. Because the distance between adjacent orifices is small, the vibration of the strands is apt to cause contact of adjacent strands prior to the immersion of water, which results in the bonding therebetween.

It has been unexpectedly found that when a surfactant is contained in the water, the vibration of the strands can be prevented and the bonding of adjacent strands can be prevented. Although not wishing to be bound by the theory, it is inferred that the surface tension of water causes the vibration of strands entering the water and that the addition of the surfactant in the water decreases the surface tension of the water to minimize the vibration of the strands.

In another aspect, the present invention provides a cylindrical thermoplastic resin pellet obtainable by the above process and having a diameter of D and a length of L, wherein the ratio L/D is greater than 1 but not greater than 5.

The present invention also provides an expanded thermoplastic resin bead obtainable by foaming and expanding the above thermoplastic resin pellet and having an apparent density of 10 to 600 g/L.

The present invention will be described in detail below with reference to the accompanying drawings, in which:

FIG. 1 is a schematic illustration of an apparatus for carrying out a strand cut method of the present invention;
FIG. 2 shows an example of a chart of an initial DSC curve of expanded polypropylene-based resin beads; and
FIG. 3 shows an example of a chart of a second time DSC curve of the polypropylene-based resin pellets.

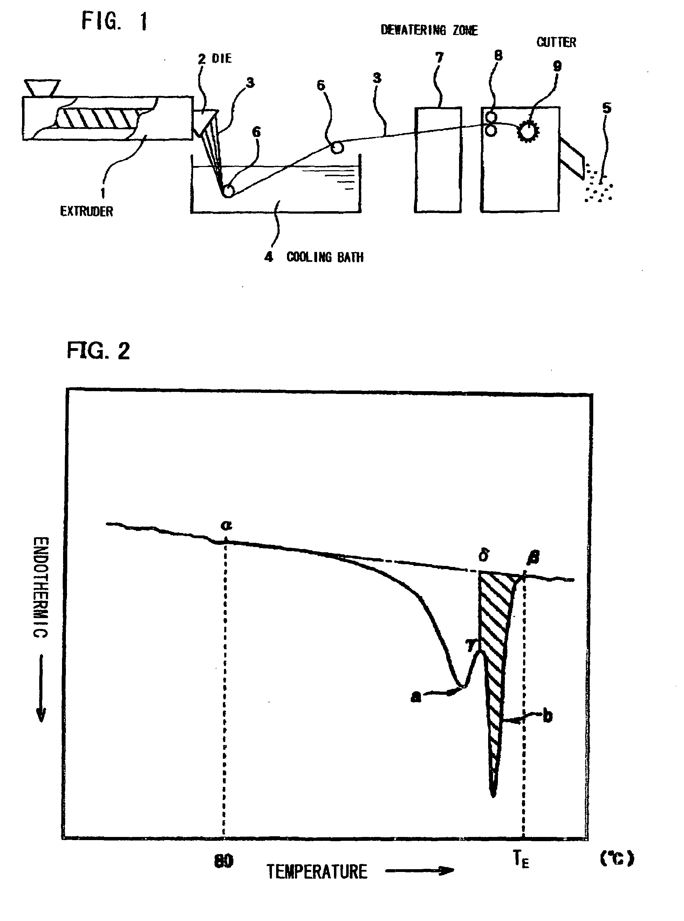

FIG. 1 depicts an example of an apparatus for carrying out the process of the present invention. Designated as 1 is an extruder in which a base resin and, if necessary, one or more additives are melted and kneaded. The melt in the extruder 1 is extruded into a gas phase through a die 2 having a plurality of orifices to form strands 3. The strands 3 are passed through a cooling bath 4 so that the strands 3 are cooled and solidified. The cooling bath must comprise water and a surfactant. The cooled strands 3 are taken out of the cooling bath 4 and preferably introduced into a dewatering zone 7. Then, the strands 3 are cut with a cutter 9 into pellets 5 having a desired size. Designated as 6 are guide rollers and as 8 are take-up rollers to continuously run the strands 3 at a controlled speed.

The number of the strands 3 extruded through the die (namely the number of the orifices of the die) is not specifically limited but is generally 2 to 10,000, preferably 5 to 5000, more preferably 50 to 500. The minimum distance between the peripheries of adjacent two orifices (inter-peripheral distance) is generally 0.3 to 9 mm, preferably 0.5 to 8 mm, more preferably 0.6 to 5 mm. In the conventional strand cut method, the inter-peripheral distance has been 10 mm or more.

The gas phase into which the melt is extruded from the extruder 1 is not specifically limited. Generally, the melt is extruded into an atmosphere of air or nitrogen. The temperature of the gas phase is generally -10 to 60°C. Ambient temperature and pressure may be usable. The melt of the thermoplastic resin in the extruder generally has a temperature of 110 to 400°C, though the temperature varies with the kind of the melt. The strands 3 immediately before entering the cooling bath generally have a temperature of 90 to 380°C.

Any surfactant having both hydrophilic and hydrophobic groups may be used for the purpose of the present invention. For reasons of reduced amount of water deposits on the cooled strands passing through the take-up rollers 8, the surfactant preferably has an HLB balance of 20 or less (1 to 20). When the amount of water deposits on the cooled strands is large, the strands tend to slip in the nip between the take-up rollers 8 and to cause cutting failure or irregular sizes of the cut pellets by the cutter 9.

The HLB value shows a balance of hydrophilicity and lipophilicity and is represented by a scale of 1 to 40 wherein the most hydrophilic materials have the highest number of 40. The HLB value may be calculated or determined by a method of Davies and Rideal described in "Chemistry of Dispersion and Emulsion System", 2nd Edition, by KITA-HARA, F and FURUSAWA, K., page 61, (edited by Kogaku Tosho Co., Ltd. on June, 15, 1980).

It is preferred that the surfactant be present in the cooling bath 4 in an amount of 0.001 to 0.1 part by weight per 100 parts by weight of the water in the cooling bath 4 for reasons of satisfactory strand bonding-preventing effect and reduced water deposits on the strands taken-out of the cooling bath 4.

The cooling bath preferably has a temperature of 0 to 60°C for reasons of efficient cooling of the strands and freedom of freeze. When the cooling bath has an excessively high temperature, there is a possibility that expanded beads obtained from the resulting pellets have small cell sizes and do not show good moldability.

The surfactant used for the purpose of the present invention may be an anionic surfactant, a cationic surfactant, an amphoteric surfactant or a nonionic surfactant.

Examples of the anionic surfactant include fatty acid salts, alkyl sulfuric acid ester salts, polyoxyethylenealkyl sulfuric acid ester salts, alkylbenzenesulfonic acid salts, alkylnaphthalenesulfonic acid salts, dialkylsulfosuccinic acid ester salt, alkyldiphenyl ether disulfonic acid salts and alkyl phosphoric acid ester salts.

Examples of the cationic surfactant include quaternary ammonium salts and alkylamine salts.

Examples of the amphoteric surfactant include alkylbetaines and amine oxides.

Examples of the nonionic surfactant include polyoxyalkylene alkyl ethers such as polyoxyethylene alkyl ethers, polyoxyethylene derivatives, sorbitan fatty acid esters, polyoxyethylene sorbitan fatty acid esters, polyoxyethylene sorbitol fatty acid esters, glycerin fatty acid esters, polyoxyethylene fatty acid esters, polyoxyethylene alkylamines, alkyl alkanolamide and modified silicone oil nonionic surfactants. The modified silicone oil nonionic surfactant may be a siloxane oil (e.g. dimethylpolysiloxane oil) having a part of its alkyl groups (e.g. methyl groups) substituted with an organic functional group to impart hydrophilicity thereto or a siloxane oil to which oxygen-containing groups are added to impart hydrophilicity thereto.

The alkyl moieties of the above-mentioned surfactants preferably have 10 to 30 carbon atoms and the fatty acid moieties of the above-mentioned surfactants preferably have 10 to 30 carbon atoms.

The surfactant used in the cooling bath is preferably a nonionic surfactant. Particularly preferred nonionic surfactants are, for example, polyoxyethylene lauryl ether, polyoxyethylene cetyl ether, polyoxyethylene stearyl ether, polyoxyethylene oleyl ether, polyoxyethylene higher alcohol ether and modified silicone oil (particularly polyether-modified silicone oil or silicone-polyether copolymer).

If desired, the cooling bath may additionally contain an adhesion preventing agent which is substantially insoluble in water and which is a fine organic or inorganic powder. The amount of the adhesion preventing agent is 0 to 3 % by weight based on the weight of the cooling bath. Examples of the adhesion preventing agent include aluminum oxide, titanium oxide, magnesium carbonate basic, zinc carbonate basic, calcium carbonate, kaolin, mica, clay and polyvinyl alcohol. The use of the adhesion preventing agent can reduce the amount of the surfactant. Further, if necessary, an antifoaming agent such as silica or an inorganic salt may be added to the cooling bath.

The amount of water deposits on the strands just taken out of the surfactant-containing cooling bath is generally greater than that taken out of a surfactant-free cooling bath. While the water deposition may be controlled by the use of a surfactant having a low HLB value, it is preferable to wash the strands taken out of the cooling bath with an aqueous liquid to remove the surfactant from the surfaces of the strands. The washing may be suitably carried out by immersing the strands into an aqueous liquid-containing washing bath located downstream of the cooling bath.

Pure water may be used as the aqueous liquid. For the purpose of improving the surfactant removal efficiency, however, a cleaning agent may be suitably contained in the aqueous liquid. A water-soluble inorganic salt capable of destroying micells on surfaces of the strands and/or an invert soap may be used as the cleaning agent. The term "invert soap" as used herein is intended to refer to an anionic surfactant when the cooling bath contains a cationic surfactant, or to a cationic surfactant when the cooling bath contains an anionic surfactant. The invert soap preferably has a function of destroying micells on surfaces of the strands.

The water-soluble inorganic salt should be soluble in 100 ml of water at 40°C in an amount of at least 1 mg and should contain a divalent or trivalent anion or cation. Illustrative of suitable water-soluble inorganic salts are magnesium chloride, magnesium nitrate, magnesium sulfate, aluminum chloride, aluminum nitrate, aluminum sulfate, iron chloride, iron sulfate and iron nitrate. The water-soluble inorganic salt is preferably used in an amount of 0.0001 to 1 part by weight per 100 parts by weight of water in the aqueous liquid. The invert soap is preferably used in an amount of 0.001 to 0.1 part by weight per 100 parts by weight of water in the aqueous liquid.

The non-washed strands or washed strands are preferably dried or dewaterized before being cut into pellets.

The base resin of which the thermoplastic resin pellets are formed may be any thermoplastic resin as long as it is softened or melted when heated and is again solidified when cooled. Examples of the thermoplastic resin include polypropylene-based resins, polyethylene-based resins, polystyrene-based resins, acrylic resins, vinyl chloride-based resins, chlorinated polyethylene resins, ethylene-vinyl acetate copolymer resins, ethylene-vinyl alcohol copolymer resins, acetyl cellulose resins, polyacetal resins, polyamide resins, polyacrylate resins, thermoplastic polyurethane elasotomers, liquid crystal polymers, polyether ether ketones, polysulfons, polyethersulfons, polyethylene terephthalate resins, polybutylene terephthalate resins, polycarbonate resins, polyphenylene ether resins, polyphenylene oxide resins, polyphenylene sulfide resins, polybutadiene resins, polymethylpentene resins, polyamide resins, thermoplastic polyimide resins, ionomer resins, ethylene-ethyl acrylate copolymer resins, ethylene-methyl acrylate copolymer resins, styrene-methyl methacrylate copolymer resins, polyacrylonitrile-acrylic acid-styrene copolymer resins, acrylonitrile-styrene copolymer resins, polydicyclopentadiene resins, acrylonitrile-chlorinated polyethylene-styrene copolymer resins, acrylonitrile-butadiene-styrene copolymer resins and fluorocarbon resins. These resins may be used singly or in combination of two or more thereof.

As used herein, the terms "polyethylene-based resin", "polypropylene-based resin" and "polystyrene-based resin" are intended to refer to thermoplastic resins containing more than 50 mole % of ethylene, more than 50 mole % of propylene and more than 50 mole % of styrene, respectively. Thus, for example, the polypropylene-based resin may be a propylene homopolymer or a copolymer containing more than 50 mole % of propylene monomer units and less than 50 mole % of one or more comonomer units.

The melting point of the thermoplastic resin used in the process of the present invention is not specifically limited. Preferably, the melting point is within the workable temperature range of the general extruder and is particularly 350°C or below. The thermoplastic resin preferably has a melt mass flow rate (MFR) of 0.1 to 80 g/10 min., more preferably 0.5 to 30 g/10 min. MFR herein is in accordance with JIS K7210(1999), wherein Condition Code M, Code D and Code H are adopted in the cases of polypropylene-based resin, polyethylene-based resin and polystyrene-based resin, respectively.

The pellets thus obtained preferably have an average weight per one pellet of 50 mg or less. The process of the present invention is most effective, when the average weight of one pellet is 1 mg or less. Thus, the pellets of the present invention particularly preferably have an average weight per one pellet of 1 mg or less, more preferably 0.2 mg or less, most preferably 0.02 to 0.2 mg. The average weight of one pellet is an arithmetic mean of the weight (mg) of arbitrarily selected 200 pellets.

The process of the present invention can produce pellets having such a small average weight of 1 mg or less. In order to produce small pellets by extrusion through a die while maintaining the extrusion rate unchanged without increasing the inside pressure of the extruder, it is necessary to form a large number of orifices having a small diameter in the die. For example, when the diameter of the strands is reduced to half, the number of orifices should be increased by 4 times. Such an increase of the number of the orifices results in a considerable reduction of the distance between adjacent orifices. Therefore, with the conventional strand cut method, adjacent strands are unavoidably bonded or adhered to each other.

According to the present invention using the surfactant-containing cooling bath, even when the inter-peripheral distance of the orifices is, for example, 1 mm, it is possible to produce thermoplastic resin pellets having an average weight per 1 pellet of 1 mg or less in a stable manner without decreasing the extrusion rate.

It is preferred that the extrusion of the melt be performed using an extruder having a barrel with an inside diameter (barrel diameter) of I (cm) and a die with n-number of orifices such that the melt is extruded through the die at a rate of W (kg/hour) while maintaining a discharge amount per one orifice M at less than 0.5 kg/hr and a discharge balance B at 0.5 kg/(hr·cm$^2$) or greater, where M and B are defined by the following formulas:

$$M = W/n$$

$$B = W/I^2$$

for reasons of stable running and cutting of the strands and practical production efficiency. The lower limit of the discharge amount per one orifice M is generally 0.01 kg/hr, preferably 0.05 kg/hr. The upper limit of the discharge balance B is generally 10 kg/(hr·cm$^2$), preferably 5 kg/(hr·cm$^2$).

The present invention also provides cylindrical pellets obtainable by the above-described strand cut method and having a diameter of D and a length of L, wherein the ratio L/D is greater than 1 but not greater than 5. Such pellets are suitably used for the production of expanded thermoplastic resin beads which, in turn, are suited for the production of in-mold moldings. When the ratio L/D of the pellets is less than 1 or greater than 5, the expanded beads obtained therefrom cannot be densely filled in a mold cavity and the resulting molding has gaps between adjacent beads.

The thermoplastic resin pellets can contain, if desired, one or more additives, such as an antioxidant, a UV absorbing agent, an antistatic agent, a flame retardant, a metal deactivator, a pigment, a dye, a nucleating agent and a cell controlling agent, in an amount of generally 20 parts by weight or less, particularly 5 parts by weight or less, per 100 parts by weight of the thermoplastic resin. The cell controlling agent may be an inorganic powder such as zinc borate, talc, calcium carbonate, sodium borate or aluminum hydroxide. The additives may be added to a melt of the thermoplastic base resin in an extruder and kneaded together.

The present invention also provides expanded thermoplastic resin beads obtainable by foaming and expanding the above thermoplastic resin pellets and having an apparent density of 10 to 600 g/L. When the apparent density is less than 10 g/L, the molding obtained from the expanded beads fails to show good dimensional stability due to shrinkage. When the apparent density is greater than 600 g/L, the molding obtained from the expanded beads fails to show good cushioning and heat insulating properties.

The base resin of which the expanded thermoplastic resin beads are formed may be, for example, polyethylene-based resins, polypropylene-based resins, polystyrene-based resins, acrylic resins, polyethylene terephthalate resins, polycarbonate resins, acrylonitrile-styrene copolymer resins, polydicyclopentadiene resins, acrylonitrile-butadiene-styrene copolymer resins, chlorinated polyethylene resins and ethylene-vinyl acetate copolymer resins. These resins may be used singly or in combination of two or more thereof. Polyethylene-based resins and polypropylene-based resins are particularly suitably used for the expanded thermoplastic resin beads.

The thermoplastic resin expanded beads may be prepared from the thermoplastic resin pellets by any suitable known method.

One preferred expanding method for the production of expanded polypropylene-based resin beads from polypropylene-based resin pellets will be described below. The polypropylene-based resin pellets are dispersed in an aqueous dispersing medium together with a dispersing agent and a blowing agent in a pressure resisting vessel. The dispersion is heated at a temperature higher than the softening point of the resin to impregnate the resin pellets with the blowing agent. The dispersion is then discharged from a discharging port of the vessel to a lower pressure zone to foam and expand the pellets.

The polypropylene-based resin which constitutes the base resin of the expanded beads may be a polypropylene homopolymer, a copolymer (propylene-based block copolymer or propylene-based random copolymer) of propylene with one or more comonomers having a propylene content of at least 60 mole %, or a mixture of two or more of these polymers. The comonomer may be an α-olefin other than propylene such as ethylene, 1-butene, 1-pentene or 1-hexene. Examples of the propylene-based random copolymer include propylene-ethylene random copolymers, propylene-butene random copolymers or ethylene-propylene-butene random copolymers. The content of the comonomer(s) in the copolymers or terpolymers is generally 0.05 to 15 % by weight, particularly 0.1 to 10 % by weight.

As the aqueous dispersing medium, water is preferably used. In addition to water, any solvent may be used as long as it can disperse the resin particles therein without dissolving the base resin. Examples of the dispersing medium other than water include ethylene glycol, glycerin, methanol and ethanol.

As the dispersing agent, finely divided inorganic powder of aluminum oxide or an aluminosilicate is suitably used. The aluminosilicate preferably contains silica-alumina as its major ingredient and has an average particle diameter of 50 $\mu$m or smaller. Examples of the aluminosilicate include natural or synthetic clay minerals such as kaolin, talc or clay, preferably with a mean particle diameter. A portion of the $Si^{4+}$ of the aluminosilicate may be substituted with a metal ion such as $Fe^{3+}$ and a portion of the $Al^{3+}$ thereof may be substituted with a metal ion such as $Fe^{2+}$ or $Mg^{2+}$. The amount of the metal ion substituted for $Si^{4+}$ and/or $Al^{3+}$ should be preferably no more than 20 % by weight of the total metal ions for reasons of ensuring the desired dispersing effect. If desired, an additional dispersing agent such as titanium oxide, basic magnesium carbonate, basic zinc carbonate, calcium carbonate or iron oxide may be used together with the aluminosilicate or aluminum oxide. The amount of the additional dispersing agent is generally no more than 30 % by weight based on the total amount of the dispersing agents.

It is preferred that the dispersing agent depositing to surfaces of the expanded beads obtained be 0.5 g or less per 100 g of the beads for reasons of satisfactory fuse-bonding of the beads in the succeeding molding stage.

In the above expanding method, a dispersion enhancing agent may be added to the dispersing medium for the purpose of improving the dispersing efficiency of the dispersing agent. The dispersion enhancing agent is an inorganic compound capable of being dissolved in water in an amount of at least 1 mg in 100 ml of water at 40°C and of providing divalent or trivalent anion or cation. Examples of the dispersion enhancing agent include magnesium chloride, magnesium nitrate, magnesium sulfate, aluminum chloride, aluminum nitrate, aluminum sulfate, iron chloride, iron sulfate and iron nitrate.

The dispersing agent and dispersion enhancing agent are generally added to the dispersion medium in amounts of 0.001 to 5 parts by weight and 0.0001 to 1 part by weight, respectively, per 100 parts by weight of the resin pellets.

The blowing agent used in the above expanding method is preferably an inorganic physical blowing agent such as nitrogen, oxygen, air, carbon dioxide and water. Above all, from the standpoint of stability of the apparent density of the expanded beads, costs and environmental problem, the use of air or nitrogen is preferred. Water used as a dispersing medium may also be used as such as the blowing agent. If desired, the inorganic physical blowing agent may be used in conjunction with an organic physical blowing agent such as an aliphatic hydrocarbon, e.g. propane, butane, pentane, hexane or heptane, an alicyclic hydrocarbon, e.g. cyclopentane or cyclohexane, or a halogenated hydrocarbon, e.g. chlorofluoromethane, trifluoromethane, 1,2-difluoroethane, 1,2,2,2-tetrafluoroethane, methylchloride, ethylchloride or methylenechloride. These organic blowing agent may be used singly or in combination with two or more thereof. The amount of the blowing agent is suitably determined in consideration of the intended expansion ratio of the expanded beads, kind of the base resin and kind of the blowing agent and is generally at most 20 parts by weight per 100 parts by weight of the base resin of the pellets.

In the above expanding method, the amount of the blowing agent charged in a vessel may be suitably determined according to the kind of the blowing agent, expansion temperature and apparent density of the expanded beads to be produced. When nitrogen is used as the blowing agent and when water is used as the dispersing medium, for example, the amount of nitrogen is preferably such that the pressure within the closed vessel in a stable state immediately before the initiation of the expansion, namely the pressure (gauge pressure) in the upper space in the closed vessel, is in the range of 0.6 to 6.0 MPa(G), preferably 0.62 to 5.0 M Pa(G).

It is preferred that the pressure in the upper space in the closed vessel be relatively high when the intended apparent density of the expanded beads is small.

The expanded polypropylene-based resin beads preferably show a high temperature peak having a calorific value of 2-50 J/g in the DSC curve thereof.

The calorific value of the high temperature peak of the expanded beads is the amount of endotherm and corresponds to the area of an endothermic peak (a high temperature peak) "b" which is present on a higher temperature side of an endothermic peak (intrinsic peak) "a" in a first DSC curve which is shown in FIG. 2. These peaks are obtained by the differential scanning calorimetric analysis wherein 2-4 mg of expanded beads are heated from room temperature (15-35°C) to 220°C at a heating rate of 10°C/minute.

More specifically, the calorific value may be determined as follows. In the DSC curve as shown in FIG. 2, a straight line ($\alpha$-$\beta$) extending between the point $\alpha$ in the curve at 80°C and the point $\beta$ in the curve at a melt completion temperature $T_E$ of the expanded beads is drawn. The melt completion temperature $T_E$ is a temperature of an intersection $\beta$ at which the high temperature peak "b" meets the base line. Next, a line which is parallel with the ordinate and which passes a point $\gamma$ in the curve at the bottom of the valley between the intrinsic peak "a" and the high temperature peak "b" is drawn. This line crosses the line ($\alpha$-$\beta$) at a point $\delta$. The area of the high temperature peak "b" is the area (shaded portion in FIG. 2) defined by the curve of the high temperature peak "b", the line ($\delta$-$\beta$), and the line ($\gamma$-$\delta$) and corresponds to the calorific value (amount of endotherm) of the high temperature peak "b".

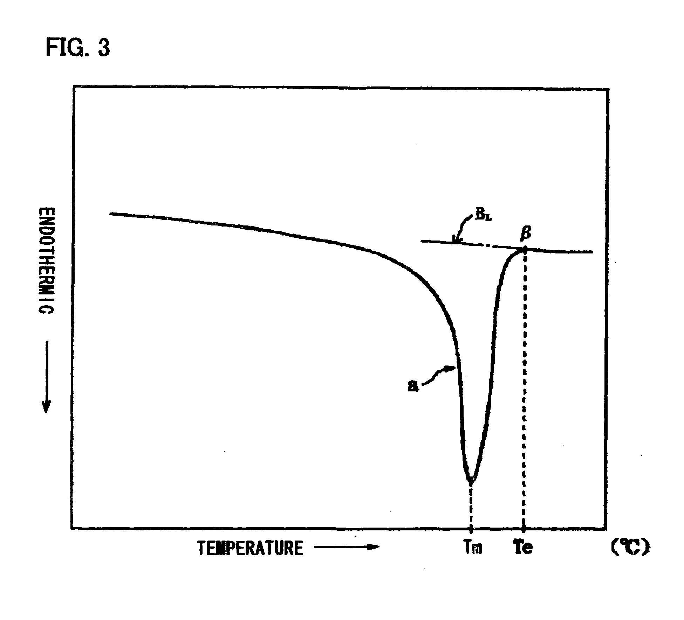

Such a high temperature peak "b" is present in the first DSC curve measured in the manner as described above. The high temperature peak "b" no longer appears in the second DSC curve obtained when the sample after the first DSC measurement is cooled from 220°C to about 40°C at a rate of 10°C/minute and is heated again for the second DSC curve by heating to 220°C at a rate of 10°C/min. The second DSC curve has only an intrinsic peak "a" attributed to the endotherm in the melting of the base resin (see FIG. 3). The high temperature peak "b" may vary with the expansion conditions such as the expansion temperature and the amount of the blowing agent.

The expanded polypropylene-based resin beads providing a DSC curve having a high temperature peak may be produced by, for example, heating the dispersion in the pressure resisting vessel to a temperature not exceeding the melt completion temperature (Te) of the base resin constituting the polypropylene-based resin pellets. The heating is stopped when a temperature (Ta) between a temperature lower by 15°C than the melting point (Tm) and a temperature lower than the melt completion temperature (Te) is reached. The dispersion is maintained at that temperature (Ta) for a sufficient period of time of preferably 10 - 60 minutes. Thereafter, the dispersion is heated to a temperature (Tb) between a temperature lower by 5°C than the melting point (Tm) and a temperature higher by 5°C than the melt completion point (Te). If necessary, the dispersion is maintained at that temperature for a sufficient period of time of preferably 10 - 60 min. Then the dispersion is discharged from the closed vessel to a lower pressure atmosphere to obtain the expanded beads.

The calorific value of the high temperature peak mainly depends upon the temperature Ta, the time for which Ta is maintained, the temperature Tb, the time for which Tb is maintained and the rate of heating of the resin pellets at the time of the production of the expanded beads. The calorific value of the high temperature peak of the expanded beads increases as a decrease of the Ta and Tb in the above-described ranges and as the retention time at Ta and Tb increases. The heating rate is generally 0.5-5°C per minute. Suitable conditions for the preparation of expanded beads having a desired calorific value of the high temperature peak can be easily determined by preliminary experiments.

The above temperature ranges are suitably adopted in the case where an inorganic physical blowing agent is used as a blowing agent. When an organic physical blowing agent is used, the suitable temperature ranges will shift toward low temperature side and vary with the kind and amount thereof.

The term "melting point (Tm)" is intended to refer to a peak temperature of a peak "a" inherent to the base resin of the polypropylene-based resin pellets in a second DSC curve (example thereof is shown in FIG. 3) obtained by a differential scanning calorimetry measurement performed in the same manner as that for obtaining the DSC curve of the above-mentioned expanded beads using 2-4 mg of the pellets. The term "melt completion temperature (Te)" is a temperature of an intersection β at which the intrinsic endothermic peak "a" meets the base line $B_L$.

The apparent density (g/L) of the expanded polypropylene-based resin beads is obtained by dividing the weight W (g) of the expanded beads by the apparent volume V (L) thereof (apparent density = W/V). The apparent volume V is measured as follows:

About 5 g of the expanded beads which have been allowed to stand at 23°C and relative humidity of 50 % for 72 hours are immersed in 100 ml water contained in a graduation cylinder at 23°C. From the increment of the volume, the apparent volume V can be determined.

The expanded beads obtained by the above process may be aged in the atmosphere. If desired, the expanded beads may be thereafter treated with high pressure air to increase the inside pressure of the cells thereof, followed by heating with steam or hot air to obtain expanded beads having a high expansion ratio.

The expanded thermoplastic resin beads obtained by foaming and expanding the thermoplastic resin pellets according to the present invention may be molded in a mold to give moldings.

An in-mold molding may be obtained by a batch-type molding method in which the expanded thermoplastic resin beads (if necessary, after being treated to increase the pressure inside of the cells thereof) are filled in a mold adapted to be heated and cooled and to be opened and closed (method disclosed in, for example, U. S. Patent No. 4,777,000, U. S. Patent No. 4,818,451, U. S. Patent No. 4,822,542, U. S. Patent No. 6,077,875, U. S. Patent No. 6,034,144, U. S. Patent No. 6,096,417 and U. S. Patent Application Publication No. 2003/0124335). Steam with a pressure of 0.15 MPa(G) to 0.59 MPa(G) is fed to the mold to heat, inflate and fuse-bond the beads together. The mold is then cooled and the EPP molding is taken out of the mold. The molding may be also produced by a continuous molding method in which the expanded thermoplastic resin beads (if necessary, after being treated to increase the pressure inside of the cells thereof) are fed to a path which is defined between a pair of vertically spaced, continuously running belts. During the passage through a steam-heating zone, the expanded beads are inflated and fuse-bonded together. The resulting molding is cooled in a cooling zone, discharged from the path and successively cut to a desired length (method disclosed in, for example, JP-A-H09-104026, JP-A-H09-104027, JP-A-H10-180888, U. S. Patent No. 5,968,430 and U. S. Patent No. 6,537,054). In this method, the path represents the in-mold. The inside pressure of the expanded thermoplastic resin beads may be increased by placing the beads in a closed vessel and feeding pressurized air to the vessel. By allowing the beads to stand for a suitable period of time, air penetrates into the cells of the beads.

The apparent density of the thermoplastic resin moldings produced by the above method is generally 15 g/L to 600 g/L, preferably 20 g/L to 500 g/L, more preferably 50 g/L to 400 g/L, still more preferably 60 g/L to 320 g/L.

The thermoplastic resin molding thus produced preferably has open cell content (according to ASTN-D2856-70, Procedure C) of 40 % or less, more preferably 30 % or less, most preferably 25 % or less. The smaller the open cell content of the molding, the better become the mechanical strengths thereof.

The following examples and comparative examples will further illustrate the present invention. Parts and percentages are by weight.

Examples 1 to 7

Preparation of Resin Pellets:

To an extruder, 100 parts of a propylene-ethylene random copolymer (ethylene content: 2.5 %; melting point: 143°C; MFR: 7 g/10 min.) and 0.05 part of zinc borate powder (cell controlling agent) were fed and kneaded at 230°C to obtain a melt. The extruder had a barrel diameter and a screw length as shown in Table 1 and had an outlet provided with a die having a multiplicity of orifices. The number, diameter and minimum distance between the peripheries of adjacent two orifices (inter-periphery distance) were as shown in Table 1. The melt was extruded through the entire orifices in the atmosphere in the form of strands. The strands were immediately introduced into a cooling bath maintained at 20°C for quenching and solidification. The cooling bath was composed of 100 parts of water and 0.005 part of polyoxyethylene lauryl ether (nonionic surfactant) and was contained in a vessel having a length of 1 m, a width of 0.4 m and a height of 1 m in an amount so that the depth of the cooling bath in the vessel was 0.9 m. The cooled strands were taken out of the cooling bath and passed through an air flow for the removal of water deposits thereon. The strands were then cut to obtain pellets. The extrusion conditions (extrusion rate W (kg/hr), discharge amount per one orifice M (kg/hr), discharge balance B (kg/(hr·cm$^2$)), amount of the surfactant in the cooling bath (part), occurrence of bonding between strands, size of the pellets and average weight of one pellet are shown in Table 1.

Preparation of Expanded Beads:

Using the pellets thus obtained, expanded beads were prepared as follows.

In a 400 liter autoclave, 100 parts of the above resin pellets were charged together with 220 parts by weight of water, 0.05 part by weight of sodium dodecylbenzenesulfonate (surfactant), 0.3 part by weight of kaolin (dispersing agent) and carbon dioxide (dry ice; blowing agent) in an amount shown in Table 1. The mixture in the autoclave was heated with stirring to a temperature lower by 5°C than the expansion temperature shown in Table 1 and then maintained at that temperature for 15 min. Thereafter, the temperature was raised to the expansion temperature and maintained at that temperature for 15 min. One end of the autoclave was then opened to discharge the contents to the atmosphere to obtain expanded beads. The discharge was carried out while feeding carbon dioxide gas such that the pressure within the autoclave was maintained at a pressure equal to the pressure in the autoclave immediately before the commencement of the discharge. The expanded beads obtained were washed with water, centrifuged and allowed to stand in the atmosphere at room temperature for 24 hours for aging. The beads after the aging were then measured for calorific value of a high temperature peak thereof and apparent density. The results are summarized in Table 1. The apparent density and the calorific value of the high temperature peak of the expanded beads thus obtained indicate that they are suited for in-mold molding.

Table 1

| Examples | | 1 | 2 | 3 | 4 | 5 | 6 | 7 |
|---|---|---|---|---|---|---|---|---|
| Extruder | Barrel diameter (cm) | 4 | 4 | 4 | 6.5 | 4 | 4 | 6.5 |
| | Screw length (cm) | 140 | 140 | 140 | 240 | 140 | 140 | 240 |
| Orifice of Die | Diameter (mm) | 0.8 | 0.8 | 0.8 | 0.8 | 0.5 | 0.8 | 0.8 |
| | Number | 102 | 102 | 102 | 272 | 258 | 102 | 272 |
| | Inter-peripheral distance (mm) | 2 | 2 | 2 | 1 | 0.8 | 2 | 1 |
| Amount of surfactant (part) | | 0.005 | 0.005 | 0.005 | 0.005 | 0.005 | 0.005 | 0.005 |
| Extrusion rate W (kg/hr) | | 12 | 14 | 14 | 75 | 11 | 12 | 70 |
| Discharge amount per orifice M (kg/hr) | | 0.12 | 0.14 | 0.14 | 0.28 | 0.04 | 0.12 | 0.26 |
| Discharge balance B (kg/(hr·cm$^2$)) | | 0.75 | 0.88 | 0.88 | 1.78 | 0.69 | 0.75 | 1.66 |
| Average weight of one pellet (mg) | | 0.3 | 0.6 | 0.1 | 0.5 | 0.05 | 0.2 | 0.2 |
| L/D of pellet | | 2 | 2 | 2 | 2 | 2 | 2 | 2 |
| Occurrence of strand bonding | | none | none | none | none | none | none | none |
| Amount of dry ice (part) | | 7 | 7 | 9 | 8 | 6 | 8 | 4 |
| Expansion temperature (°C) | | 148 | 148 | 146 | 147 | 149 | 149 | 150 |
| Apparent density of expanded beads (g/L) | | 70 | 68 | 60 | 50 | 95 | 51 | 111 |
| Calorific value of high temperature peak of expanded beads (J/g) | | 14 | 15 | 15 | 15 | 14 | 11 | 14 |

EP 1 555 102 A1

Comparative Examples 1 to 4

Resin pellets were prepared in the same manner as described in the above Examples except that the extruder and its die had the structure shown in Table 2, that the extrusion conditions were changed as shown in Table 2 and that no surfactant was contained in the cooling bath. The structure of the extruder and die, extrusion conditions (extrusion rate W (kg/hr), discharge amount per one orifice M (kg/hr), discharge balance B (kg/(hr-cm$^2$)), amount of the surfactant in the cooling bath (part), occurrence of bonding between strands, the size of the pellets and average weight of one pellet are shown in Table 2.

Table 2

| Comparative Examples | | 1 | 2 | 3 | 4 |
|---|---|---|---|---|---|
| Extruder | Barrel diameter (cm) | 4 | 6.5 | 4 | 4 |
| | Screw length (cm) | 140 | 240 | 140 | 140 |
| Orifice of Die | Diameter (mm) | 0.8 | 0.8 | 1 | 1 |
| | Number | 102 | 272 | 16 | 32 |
| | Inter-peripheral distance (mm) | 2 | 1 | 9 | 5 |
| Amount of surfactant (part) | | 0 | 0 | 0 | 0 |
| Extrusion rate W (kg/hr) | | 14 | 75 | 5 | 4 |
| Discharge amount per orifice M (kg/hr) | | 0.14 | 0.28 | 0.31 | 0.13 |
| Discharge balance B (kg/(hr·cm$^2$) | | 0.88 | 1.78 | 0.31 | 0.25 |
| Average weight of one pellet (mg) | | 0.1 | 0.5 | 0.5 | 0.2 |
| L/D of pellet | | 2* | 2* | 2 | 2 |
| Occurrence of strand bonding | | occurred | occurred | none | none , |

*: L/D of non-bonded sample

As will be understood from the results summarized in Table 1, small resin pellets having a weight per pellet of less than 1 mg can be obtained in Examples 1 to 7 with a high extrusion rate without causing bonding between strands. It should be noted that the inter-peripheral distance between adjacent orifices of the die is very small (2 mm or less). Yet, surprisingly, no bonding of strands is caused. Thus, it is possible to reduce the size of the die and, therefore, the size of the extruder. The present invention can not only improve the production efficiency but also contribute to the reduction of equipment costs.

In Comparative Example 1 which is carried out in the same extrusion conditions as those in Example 3 except that the cooling bath does not contain a surfactant, bonding of strands occurs significantly. In order to prevent the occurrence of the bonding, it is necessary to increase the inter-peripheral distance between the orifices and to reduce the number of the orifices, as in the case of Comparative Example 3. In Comparative Example 3, however, the extrusion rate is only about one third of Example 3 and the production efficiency is poor.

In Comparative Example 2 which is carried out in the same extrusion conditions as those in Example 4 except that the cooling bath does not contain a surfactant, bonding of strands occurs significantly. In order to prevent the occurrence of the bonding, it is necessary to increase the inter-peripheral distance between the orifices and to reduce the number of the orifices, as in the case of Comparative Example 4. In Comparative Example 4, however, the extrusion rate is only about one fifteenth of Example 4 and the production efficiency is poor.

Example 8

Preparation of Resin Pellets:

To an extruder, 100 parts of a propylene-ethylene random copolymer (ethylene content: 2.5 %; melting point: 143°C; MFR: 7 g/10 min.) and 0.05 part of zinc borate powder (cell controlling agent) were fed and kneaded at 230°C to obtain a melt. The extruder had a barrel diameter of 6.5 cm and a screw length of 240 cm and had an outlet provided with a die having a multiplicity of orifices. The number, diameter and minimum distance between the peripheries of adjacent two orifices (inter-periphery distance) were as shown in Table 3. The melt was extruded through the entire orifices in the atmosphere in the form of strands. The strands were immediately introduced into a cooling bath maintained at 20°C for quenching and solidification. The cooling bath was composed of 100 parts of water and 0.03 part of polyether-modified silicone oil (nonionic surfactant; SR8410 manufactured by Toray Dow Corning Silicone Co., Ltd.) and was contained in a vessel having a length of 1 m, a width of 0.4 m and a height of 1 m in an amount so that the depth of the cooling bath in the vessel was 0.9 m. The cooled strands were taken out of the cooling bath and immersed in a washing bath containing pure water and maintained at 15°C for the removal of deposits of the surfactant. The washing bath was contained in a vessel having a length of 1 m, a width of 0.4 m and a height of 1 mm in an amount so that the depth of the cooling bath was 0.9 m. The washed strands were then passed through an air flow for the removal of water deposits thereon. The strands were then cut to obtain pellets. The extrusion conditions (extrusion rate W (kg/hr), discharge amount per one orifice M (kg/hr), discharge balance B (kg/(hr·cm$^2$)), amount of the surfactant in the cooling bath (part), occurrence of bonding between strands, size of the pellets and average weight of one pellet are shown in Table 3.

Preparation of Expanded Beads:

Using the pellets thus obtained, expanded beads were prepared as follows.

In a 400 liter autoclave, 100 parts of the above resin pellets were charged together with 220 parts by weight of water, 0.05 part by weight of sodium dodecylbenzenesulfonate (surfactant), 0.3 part by weight of kaolin (dispersing agent), 0.02 part of aluminum sulfate (dispersing aid) and carbon dioxide (dry ice; blowing agent) in an amount shown in Table 3. The mixture in the autoclave was heated with stirring to a temperature lower by 5°C than the expansion temperature shown in Table 3 and then maintained at that temperature for 15 min. Thereafter, the temperature was raised to the expansion temperature and maintained at that temperature for 15 min. One end of the autoclave was then opened to discharge the contents to the atmosphere to obtain expanded beads. The discharge was carried out while feeding carbon dioxide such that the pressure within the autoclave was maintained at a pressure equal to the pressure in the autoclave immediately before the commencement of the discharge. The expanded beads obtained were washed with water, centrifuged and allowed to stand in the atmosphere at room temperature for 24 hours for aging. The beads after the aging were then measured for calorific value of a high temperature peak thereof and apparent density. The results are summarized in Table 3. The apparent density and the calorific value of the high temperature peak of the expanded beads thus obtained indicate that they are suited for in-mold molding.

Example 9

Example 8 was repeated in the same manner as described except that the resin melt contained 1 part of carbon black (coloring agent), 3 parts of brominated flame retardant (Trade Name: FIRE GUARD FG-3100; manufactured by Teijin Chemical Co., Ltd.) and 1.5 parts of antimony trioxide (flame retardant aid) in addition to 100 parts of the propylene-ethylene random copolymer and 0.05 part of the zinc borate powder and that the orifice number, the discharge amount per one orifice and the amount of dry ice were changed as shown in Table 3. The results are summarized in Table 3. The apparent density and the calorific value of the high temperature peak of the expanded beads thus obtained indicate that they are suited for in-mold molding.

Table 3

| Examples | | | 8 | 9 |
|---|---|---|---|---|
| Orifice of Die | Diameter (mm) | | 0.8 | 0.8 |
| | Number | | 272 | 275 |
| | Inter-peripheral distance (mm) | | 1 | 1 |
| Amount of surfactant (part) | | | 0.03 | 0.03 |
| Extrusion rate W (kg/hr) | | | 70 | 70 |
| Discharge amount per orifice M (kg/hr) | | | 0.26 | 0.25 |
| Discharge balance B (kg/(hr·cm$^2$) | | | 1.66 | 1.66 |
| Average weight of one pellet (mg) | | | 0.2 | 0.2 |
| L/D of pellet | | | 2.4 | 2.4 |
| Occurrence of strand bonding | | | none | none |
| Amount of dry ice (part) | | | 8 | 6 |

Table 3 (continued)

| Examples | 8 | 9 |
|---|---|---|
| Expansion temperature (°C) | 148.5 | 148.5 |
| Apparent density of expanded beads (g/L) | 51 | 70 |
| Calorific value of high temperature peak of expanded beads (J/g) | 11 | 11 |

**Claims**

1.  A process for preparing thermoplastic resin pellets, comprising the steps of:

    (a) extruding a melt of a thermoplastic resin into a gas phase through a die in the form of strands;
    (b) immersing said strands in a bath containing water and a surfactant to cool said strands;
    (c) taking said cooled strands out of said bath; and
    (d) cutting said taken-out strands into pellets.

2.  A process as claimed in claim 1, wherein said surfactant is present in an amount of 0.1 part by weight or less per 100 parts by weight of the water.

3.  A process as claimed in claim 1 or 2, wherein said bath has a temperature of 60°C or below.

4.  A process as claimed in any preceding claim, wherein said surfactant is a nonionic surfactant.

5.  A process as claimed in any preceding claim, wherein said taken-out strands are washed with an aqueous liquid before step (d).

6.  A process as claimed in any preceding claim, wherein step (a) is performed using an extruder having a barrel diameter of I (cm) and n-number of orifices such that the melt is extruded through the die at a rate of W (kg/hour) while maintaining a discharge amount per one orifice M at less than 0.5 kg/hr and a discharge balance B at 0.5 kg/(hr·cm$^2$) or greater, where M and B are defined by the following formulas:

$$M = W/n$$

$$B = W/I^2.$$

7.  A process as claimed in claim 6, wherein step (d) is performed so that the pellets obtained have an average weight per one pellet of 1 mg or less.

8.  A cylindrical pellet obtainable by a process according to any preceding claim and having a diameter of D and a length of L, wherein the ratio L/D is greater than 1 but not greater than 5.

9.  An expanded thermoplastic resin bead obtainable by foaming and expanding the thermoplastic resin pellet according to claim 8 and having an apparent density of 10 to 600 g/L.

FIG. 1

FIG. 2

FIG. 3

**European Patent Office**

**EUROPEAN SEARCH REPORT**

Application Number

EP 04 03 0860

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y,D | US 4 692 507 A (AKIYAMA ET AL) 8 September 1987 (1987-09-08) | 1-7 | B29B9/06 C08J9/16 C08J3/12 |
| X | * column 4, lines 25-35; table 1 * | 8,9 | |
| Y | PATENT ABSTRACTS OF JAPAN vol. 1997, no. 12, 25 December 1997 (1997-12-25) & JP 09 221562 A (DAINIPPON INK & CHEM INC), 26 August 1997 (1997-08-26) * abstract * | 1-7 | |
| X | PATENT ABSTRACTS OF JAPAN vol. 1998, no. 06, 30 April 1998 (1998-04-30) & JP 10 034647 A (NITTO DENKO CORP), 10 February 1998 (1998-02-10) * abstract * | 8,9 | |
| X | US 4 602 082 A (AKIYAMA ET AL) 22 July 1986 (1986-07-22) * table 2 * | 8,9 | TECHNICAL FIELDS SEARCHED (Int.Cl.7) |
| A | PATENT ABSTRACTS OF JAPAN vol. 1998, no. 10, 31 August 1998 (1998-08-31) & JP 10 119037 A (KANEGAFUCHI CHEM IND CO LTD), 12 May 1998 (1998-05-12) * abstract * | 1-7 | B29B C08J |
| A | PATENT ABSTRACTS OF JAPAN vol. 011, no. 322 (C-453), 20 October 1987 (1987-10-20) & JP 62 109826 A (HAMAZAKI SANGYO KK), 21 May 1987 (1987-05-21) * abstract * | 1-7 | |

-/--

The present search report has been drawn up for all claims

| Place of search | Date of completion of the search | Examiner |
|---|---|---|
| Munich | 8 April 2005 | Kofoed, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 555 102 A1**

**European Patent Office**

**EUROPEAN SEARCH REPORT**

Application Number

EP 04 03 0860

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 0 918 066 A (JSP CORPORATION) 26 May 1999 (1999-05-26) * abstract * ----- | 1-9 | |
| A | EP 0 905 176 A (JSP CORPORATION) 31 March 1999 (1999-03-31) * paragraphs [0012], [0032], [0036], [0058]; table 1 * ----- | 1-9 | |
| A | US 5 310 515 A (JUERGEN ET AL) 10 May 1994 (1994-05-10) * abstract * ----- | 1-9 | |
| | | | **TECHNICAL FIELDS SEARCHED (Int.Cl.7)** |

The present search report has been drawn up for all claims

| Place of search | Date of completion of the search | Examiner |
|---|---|---|
| Munich | 8 April 2005 | Kofoed, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**  EP 04 03 0860

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2005

| Patent document cited in search report | | Publication date | Patent family member(s) | | Publication date |
|---|---|---|---|---|---|
| US 4692507 | A | 08-09-1987 | JP | 1841146 C | 25-04-1994 |
| | | | JP | 5046852 B | 15-07-1993 |
| | | | JP | 61215631 A | 25-09-1986 |
| | | | CA | 1257744 A1 | 18-07-1989 |
| | | | DE | 3585228 D1 | 27-02-1992 |
| | | | DE | 195118 T1 | 19-03-1987 |
| | | | EP | 0195118 A1 | 24-09-1986 |
| | | | US | 4602082 A | 22-07-1986 |
| JP 09221562 | A | 26-08-1997 | NONE | | |
| JP 10034647 | A | 10-02-1998 | NONE | | |
| US 4602082 | A | 22-07-1986 | JP | 1841146 C | 25-04-1994 |
| | | | JP | 5046852 B | 15-07-1993 |
| | | | JP | 61215631 A | 25-09-1986 |
| | | | CA | 1257744 A1 | 18-07-1989 |
| | | | DE | 3585228 D1 | 27-02-1992 |
| | | | DE | 195118 T1 | 19-03-1987 |
| | | | EP | 0195118 A1 | 24-09-1986 |
| | | | US | 4692507 A | 08-09-1987 |
| JP 10119037 | A | 12-05-1998 | NONE | | |
| JP 62109826 | A | 21-05-1987 | JP | 1998910 C | 08-12-1995 |
| | | | JP | 4043092 B | 15-07-1992 |
| EP 0918066 | A | 26-05-1999 | DE | 69727682 D1 | 25-03-2004 |
| | | | DE | 69727682 T2 | 02-12-2004 |
| | | | EP | 0918066 A1 | 26-05-1999 |
| | | | US | 6451419 B1 | 17-09-2002 |
| | | | WO | 9806777 A1 | 19-02-1998 |
| EP 0905176 | A | 31-03-1999 | BR | 9706836 A | 28-12-1999 |
| | | | DE | 69727377 D1 | 04-03-2004 |
| | | | DE | 69727377 T2 | 16-09-2004 |
| | | | EP | 0905176 A1 | 31-03-1999 |
| | | | US | 6133331 A | 17-10-2000 |
| | | | WO | 9825996 A1 | 18-06-1998 |
| US 5310515 | A | 10-05-1994 | DE | 4133329 A1 | 15-04-1993 |
| | | | CA | 2079070 A1 | 09-04-1993 |
| | | | CN | 1074403 A ,C | 21-07-1993 |
| | | | DE | 59207619 D1 | 16-01-1997 |
| | | | EP | 0539744 A1 | 05-05-1993 |
| | | | ES | 2094865 T3 | 01-02-1997 |

For more details about this annex : see Official Journal of the European Patent Office, No. 12/82

EPO FORM P0459

**ANNEX TO THE EUROPEAN SEARCH REPORT
ON EUROPEAN PATENT APPLICATION NO.**

EP 04 03 0860

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2005

| Patent document cited in search report | Publication date | Patent family member(s) | Publication date |
|---|---|---|---|
| US 5310515 A | | JP 2579874 B2<br>JP 5212721 A<br>KR 125284 B1 | 12-02-1997<br>24-08-1993<br>01-12-1997 |

EPO FORM P0459

For more details about this annex : see Official Journal of the European Patent Office, No. 12/82